(19) Europäisches Patentamt
European Patent Office
Office européen des brevets

(11) Veröffentlichungsnummer: **0 053 787**
**B1**

(12) # EUROPÄISCHE PATENTSCHRIFT

(45) Veröffentlichungstag der Patentschrift: **09.05.84**

(51) Int. Cl.³: **C 07 F 9/173**, C 07 F 9/48

(21) Anmeldenummer: **81110037.9**

(22) Anmeldetag: **01.12.81**

(54) **S-Brom-dithiophosphorsäure-, dithiophosphonsäure- und dithio-phosphinsäure-Derivate sowie Verfahren zu deren Herstellung.**

(30) Priorität: **10.12.80 PL 228376**

(43) Veröffentlichungstag der Anmeldung: **16.06.82 Patentblatt 82/24**

(45) Bekanntmachung des Hinweises auf die Patenterteilung: **09.05.84 Patentblatt 84/19**

(84) Benannte Vertragsstaaten: **BE CH DE FR GB IT LI NL**

(56) Entgegenhaltungen: **Chemical Abstracts, Volume 52, 6156f**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Michalski, Jan, ul. Brzezna 6 m 3, 90-303 Lódz (PL)**
Erfinder: **Potrzebowski, Marek, ul. Tatrzanska 37/4 m 35, 93-219 Lódz (PL)**
Erfinder: **Lopusinski, Andrzej, ul. Zukowa 90 m 42, 95-200 Pabianice (PL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 053 787 B1

ACTORUM AG

**Beschreibung**

Die Erfindung betrifft neue S-Brom-dithiophosphorsäure-, dithiophosphonsäure- und dithiophosphinsäure-Derivate sowie ein neues Verfahren zu deren Herstellung.

Es ist bekannt, dass man S-Chlor-thiolphosphorsäure-O,O-dialkylester erhält, wenn man Thionophosphonsäure-O,O,O-trialkylester mit Sulfurylchlorid umsetzt (vergleiche DE-OS 2 012 272). S-Chlor-(thiono)thiol-phosphorsäure-O,O-diakylester können als Zwischenprodukte zur Herstellung von Insektiziden, Pflanzenwuchsregulatoren, Schmiermittelzusätzen und Vulkanisationshilfsmitteln verwendet werden (vergleiche DE-OS 2 012 727; US-PS 3 114 761 und 3 969 349). In Chemical Abstracts Vol. 52, 6156 f wird die Umsetzung von O,O-Diethyldithiophosphorsäureester bzw. dessen Na-Salzes mit Brom beschrieben, wobei unter den dort angegebenen Reaktionsbedingungen im wesentlichen Dithiophosphorsäureesterdisulfide erhalten werden. Gemäss dieser Veröffentlichung werden 1 Mol des Phosphorsäureesters bzw. des Na-Salzes in der (nicht näher spezifizierten) Kälte mit der 1/2 molaren Menge Brom oder bei Zimmertemperatur mit etwa der äquimolaren Menge Brom umgesetzt, während beim erfindungsgemässen Verfahren Temperaturen zwischen −25 bis +5°C und 0,9 bis 1,2 Mol Brom angewendet werden.

S-Brom-analoge Dithioverbindungen sind bisher noch nicht bekannt. Sie sollten wegen der im allgemeinen besseren Abgangsgruppeneigenschaften vom Brom im Vergleich mit Chlor vorteilhaft als Zwischenprodukte verwendet werden können.

Es wurde nun gefunden, dass man neue S-Brom-dithiophosphorsäure-, -dithiophosphonsäure- und -dithiophosphinsäure-Derivate der Formel I

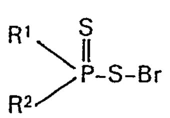

(I)

in welcher

$R^1$ und $R^2$ gleich oder verschieden sein können und unabhängig von einander für Reste aus der Reihe $C_1$–$C_{10}$-Alkyl, Aralkyl mit $C_6$ oder $C_{10}$-Arylteil und $C_1$–$C_4$-Alkylteil, $C_6$ oder $C_{10}$-Aryl, $C_1$–$C_6$-Alkoxy, $C_6$ oder $C_{10}$-Aryloxy, Aralkoxy mit $C_6$ oder $C_{10}$-Arylteil und $C_1$–$C_4$-Alkylteil, $C_1$–$C_6$-Alkylthio, $C_6$ oder $C_{10}$-Arylthio und Aralkylthio mit $C_6$ oder $C_{10}$-Arylteil und $C_1$–$C_4$-Alkylteil stehen, wobei diese Reste einen oder mehrere, gleiche oder verschiedene Substituenten aus der Reihe $C_1$–$C_4$-Alkyl, $C_1$–$C_4$-Alkoxy, $C_1$–$C_4$-Alkylthio, $C_1$–$C_4$-Halogenalkyl, Halogen, Cyano, Nitro, $C_2$–$C_4$-Alkoxycarbonyl und im Falle von Arylteilen enthaltenden Resten in den Arylteilen auch $C_1$–$C_3$-Alkylendioxygruppen, welche durch 1 bis 4 gleiche oder verschiedene Halogenatome substituiert sein können, tragen können, erhält, wenn man Dithiophosphorsäure-, Dithiophosphonsäure- oder Dithiophosphinsäure-Derivat der Formel II

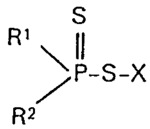

(II)

in welcher

$R^1$ und $R^2$ die oben angegebene Bedeutung haben und

X für Wasserstoff, ein Alkalimetallatom (bzw. -ion), einen gegebenenfalls durch Alkyl, Aralkyl und/oder Aryl-substituierten Ammoniumrest, für Trialkylsilyl oder für den gleichen Rest, an den es gebunden ist, steht,

mit 0,9 bis 1,2 Mol Brom in Gegenwart eines inerten Verdünnungsmittels bei Temperaturen zwischen −25 und +5°C umsetzt.

Überraschenderweise werden nach dem erfindungsgemässen Verfahren die neuen Verbindungen der Formel (I) in guten Ausbeuten und in hoher Reinheit erhalten.

$C_1$–$C_{10}$-Alkyl für $R^1$ und $R^2$ steht vorzugsweise für geradkettiges oder verzweigtes Alkyl mit 1 bis 5 Kohlenstoffatomen. Beispielhaft seien Methyl, Ethyl, n- und iso-Propyl sowie n-, iso-, sec- und tert-Butyl genannt.

Von den Aralkylresten mit 6 oder 10 Kohlenstoffatomen im Arylteil und 1 bis 4 Kohlenstoffatomen im Alkylteil sind diejenigen mit 6 Kohlenstoffatomen im Arylteil und 1 oder 2 Kohlenstoffatomen im Alkylteil bevorzugt, wobei der Alkylteil geradkettig oder verzweigt sein kann. Beispielhaft seien Benzyl oder Phenylethyl genannt.

Als Aryl mit 6 oder 10 Kohlenstoffatomen im Arylteil ist der Rest mit 6 Kohlenstoffatomen im Arylteil bevorzugt. Beispielhaft sei Phenyl genannt.

Als $C_1$–$C_6$-Alkoxy oder Alkylthio für $R^1$ und $R^2$ ist geradkettiges oder verzweigtes Alkoxy oder Alkylthio mit 1 bis 4 Kohlenstoffatomen bevorzugt. Beispielhaft seien Methoxy, Ethoxy, n- und iso-Propoxy, n-, iso-, sec- und tert-Butoxy, Methylthio, Ethylthio, n- und iso-Propylthio sowie n-, iso-, sec- und tert-Butylthio genannt.

Unter den $C_6$- oder $C_{10}$-Aryloxy- und Arylthio-Resten $R^1$ und $R^2$ sind diejenigen mit 6 Kohlenstoffatome im Arylteil bevorzugt. Beispielhaft seien Phenoxy und Phenylthio genannt.

Unter den Aralkoxy- und Aralkylthio-Resten $R^1$ und $R^2$ mit 6 oder 10 Kohlenstoffatomen im Arylteil und 1–4 Kohlenstoffatomen im Alkylteil sind diejenigen mit 6 Kohlenstoffatomen im Arylteil bevorzugt. Der Alkylteil ist geradkettig oder verzweigt und enthält vorzugsweise 1 oder 2 Kohlenstoffatome. Beispielhaft seien Benzyloxy und Benzylthio genannt.

Die in der Definition und $R^1$ und $R^2$ genannten Reste können einen oder mehrere, vorzugsweise 1 bis 3, insbesondere 1 oder 2 gleiche oder verschiedene Substituenten aus der folgenden Gruppe tragen: Alkyl mit 1 bis 4, vorzugsweise 1

oder 2 Kohlenstoffatomen, wie Methyl, Ethyl, n- und iso-Propyl und n-, iso-, sec- und tert-Butyl; Alkoxy mit 1 bis 4, vorzugsweise 1 oder 2 Kohlenstoffatomen, wie Methoxy, Ethoxy, n- und iso-Propoxy und n-, iso- sec- und tert-Butoxy; Alkylthio mit 1 bis 4, vorzugsweise 1 oder 2 Kohlenstoffatomen, wie Methylthio, Ethylthio, n- und iso-Propylthio und n-, iso-, sec- und tert-Butylthio; Halogenalkyl mit 1 bis 4, vorzugsweise 1 oder 2 Kohlenstoffatomen und vorzugsweise 1 bis 5, insbesondere 1 bis 3 Halogenatomen, wobei die Halogenatome, gleich oder verschieden sind und als Halogenatome, vorzugsweise Fluor, Chlor oder Brom, insbesondere Fluor stehen, wie Trifluormethyl; Halogen, Fluor, Chlor, Brom und Iod, vorzugsweise Chlor und Brom; Cyano; Nitro; Alkoxycarbonyl mit 2 bis 4, vorzugsweise 2 oder 3 Kohlenstoffatomen, wie Methoxycarbonyl und Ethoxycarbonyl. Im Falle von Arylteile enthaltenden Resten können die Arylteile z.B. die Phenylringe durch Alkylendioxygruppen substituiert sein, welche 1 bis 3, vorzugsweise 1 oder 2 Kohlenstoffatome enthalten und durch 1 bis 4 gleiche oder verschiedene Halogenatome (Fluor oder Chlor) substituiert sein können.

Nach dem erfindungsgemässen Verfahren erhält man vorzugsweise Verbindungen der Formel (I), in welcher
$R^1$ und $R^2$ gleich oder verschieden sind und für gegebenenfalls durch Halogen substituierte Reste aus der Reihe $C_1$–$C_5$-Alkyl, Phenyl, Benzyl, $C_1$–$C_5$-Akoxy, Phenoxy, Benzyloxy, $C_1$–$C_5$-Alkylthio, Phenylthio und Benzylthio stehen.

Das erfindungsgemässe Verfahren betrifft insbesondere die Herstellung von Verbindungen der Formel (I), in welcher
$R^1$ für $C_1$–$C_5$-Alkyl, $C_1$–$C_5$-Alkoxy oder Phenoxy steht und
$R^2$ für $C_1$–$C_5$-Alkoxy oder Phenoxy steht.

Verwendet man beim erfindungsgemässen Verfahren als Ausgangsstoffe beispielsweise Dithiophosphorsäure-O,O-diethylester-Tetrabutylammoniumsalz und Brom, so kann die Reaktion dieser Verbindungen durch folgendes Formelschema skizziert werden:

$$(H_5C_2O)_2\overset{\overset{S}{\|}}{P}-S^{\ominus}\ \overset{\oplus}{N}(C_4H_9)_4 + Br_2 \rightarrow (H_5C_2O)_2\overset{\overset{S}{\|}}{P}-S-BR + \overset{\oplus}{N}(C_4H_9)_4\overset{\ominus}{Br}$$

Die beim erfindungsgemässen Verfahren als Ausgangsstoffe zu verwendenden Dithiophosphorsäure-, Dithiophosphonsäure- und Dithiophosphinsäure-Derivate sind durch Formel (II) definiert. In dieser Formel stehen $R^1$ und $R^2$ vorzugsweise bzw. insbesondere für diejenigen Reste, welche oben bei der Definition der entsprechenden Reste in Formel (I) als bevorzugt bzw. als insbesondere bevorzugt angegeben sind und X steht vorzugsweise für Wasserstoff, Natrium, Kalium, Ammonium, Mono-, Di-, Tri- und Tetraalkylammonium mit jeweils 1 bis 4 Kohlenstoffatomen je Alkylgruppe, Phenyl oder Benzyl-trialkylammonium mit jeweils 1 bis 4 Kohlenstoffatomen je Alkylgruppe, Trialkylsilyl mit 1 bis 4 Kohlenstoffatomen je Alkylgruppe oder für den gleichen Rest, an den es gebunden ist.

Als Beispiele für die Ausgangsverbindungen der Formel (II) seien genannt:

Dithiophosphorsäure-O,O-dimethylester, -diethylester, -di-n-propylester, -di-iso-propylester, -di-n-butylester, -di-isobutylester, -di-secbutylester, -di-n-pentylester, -di-isopentylester, -di-(2,2-dimethyl-propyl)-ester, -diphenylester, Methan-, Ethan-, Propan- und Butan-dithiophosphonsäure-methyl-ester, -ethylester, -n- und -iso-propylester, -n-, -iso-, sec-und -tert-butylester sowie die Natriumsalze, Kaliumsalze und Ammoniumsalze dieser Verbindungen, die S-Trimethylsilylderivate dieser Verbindungen und die von diesen Verbindungen gebildeten Disulfane.

Die Verbindungen der Formel (II) sind bekannt und/oder können nach an sich bekannten Verfahren auf einfache Weise hergestellt werden.

Das erfindungsgemässe Verfahren wird in Gegenwart eines inerten Verdünnungsmittels durchgeführt. Besonders als Verdünnungsmittel geeignet sind aprotische Solventien, vor allem aus der Reihe der gegebenenfalls halogenierten Kohlenwasserstoffe, wie z.B. Pentan, Hexan, Heptan, Octan, Nonan, Decan, 2-Methyl-pentan, 3-Methyl-pentan, 2-Methyl-hexan, 2,2,4-Trimethylpentan, und Gemische, wie Petrolether, Benzin oder Ligroin, ferner Cyclohexan, Methylcyclohexan, Benzol, Toluol und Xylol, Methylenchlorid, Ethylenchlorid, Chloroform und Tetrachlorkohlenstoff. Die genannten Verdünnungsmittel können in beliebigen Mischungen eingesetzt werden.

Die Reaktionstemperatur wird beim erfindungsgemässen Verfahren zwischen −25°C und +5°C gehalten. Das Verfahren wird im allgemeinen bei Normaldruck durchgeführt.

Zur Durchführung des erfindungsgemässen Verfahrens setzt man je Mol Ausgangsverbindung der Formel (II) zwischen 0,9 und 1,2 Mol, vorzugsweise 1,0 Mol Brom ein.

In einer bevorzugten Ausführungsform des erfindungsgemässen Verfahrens wird die Ausgangsverbindung der Formel (II) in einem oder mehreren der oben angegebenen Verdünnungsmittel dispergiert und mit Brom, welches gegebenenfalls in einem der oben angegebenen Verdünnungsmittel gelöst ist, tropfenweise versetzt. Die Reaktionstemperatur wird dabei zunächst im Bereich zwischen vorzugsweise −25 und −5°C gehalten. Das Reaktionsgemisch wird bis zum Ende der Umsetzung gerührt; dann wird gegebenenfalls filtriert und bei einer Temperatur zwischen vorzugsweise −5 und +5°C das Verdünnungsmittel und gegebenenfalls das Koppelprodukt unter vermindertem Druck abdestilliert, wobei das Produkt der Formel (I) als Rückstand verbleibt.

Die nach dem erfindungsgemässen Verfahren herzustellenden Verbindungen der Formel (I) können als Flammschutzmittel, Vulkanisationsbeschleuniger und, analog zu den entsprechenden Chloriden, als Zwischenprodukte für Pestizide verwendet werden.

Beispiel 1

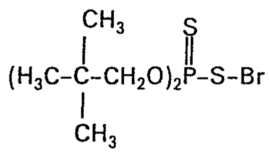

16,0 g (0,1 mol) Brom, gelöst in 10 ml Tetrachlorkohlenstoff, werden zu einer Mischung aus 34,2 g (0,1 mol) S-Trimethylsilyl-dithiophosphorsäure-O,O-di(2,2-dimethyl-propyl)-ester und 100 ml Tetrachlorkohlenstoff, welche man auf −15°C gekühlt hat, tropfenweise gegeben. Das Reaktionsgemisch wird dann weitere 30 Minuten gerührt. Anschliessend werden das als Koppelprodukt gebildete Brom-trimethylsilan und das Lösungsmittel im Wasserstrahlvakuum bei 0 bis +5°C sorgfältig abdestilliert. Man erhält 34,0 g (97% der Theorie) S-Brom-dithiophosphorsäure-O,O-di(2,2-methyl-propyl)-ester als gelbes Öl.

$^{31}$P-NMR: $\vartheta$ = +74,4 ppm (relativ zu 85%iger Phosphorsäure)

Beispiel 2

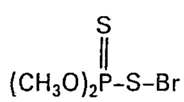

Eine Lösung von 16,0 g (0,1 mol) Brom in 10 ml Chloroform wird zu einer auf −20°C gekühlten Lösung von Bis-(dimethoxythiophosphoryl)-disulfid in 80 ml Chloroform tropfenweise gegeben. Das Reaktionsgemisch wird dann weitere 20 Minuten gerührt. Anschliessend wird das Lösungsmittel bei −5 bis 0°C/5 Torr sorgfältig abdestilliert. Man erhält 40,0 g (97% der Theorie) S-Brom-dithiophosphorsäure-O,O-dimethylester. $^{31}$P-NMR: $\vartheta$ = 79,9 ppm (relativ zu 85%iger Phosphorsäure)

Beispiel 3

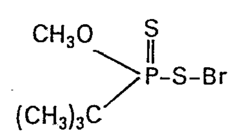

Eine Lösung von 8 g (0,05 mol) Brom in 10 ml Petrolether wird zu einer auf −25°C gekühlten Suspension von 10,3 g (0,05 mol) 1,1-Dimethylethan-dithiophosphonsäure-O-methylester-Natriumsalz in 50 ml Petrolether tropfenweise gegeben. Nach Ende der Umsetzung wird unter Luftausschluss filtriert und vom Filtrat wird das Lösungsmittel bei 3 Torr/−5 bis 0°C sorgfältig abdestilliert. Man erhält 11,7 g (93% der Theorie) S-Brom-1,1-dimethylethandithiophosphonsäure-O-methylester als gelbes Öl.

$^{31}$P-NMR: $\vartheta$ = 110,7 ppm (relativ zu 85%iger Phosphorsäure)

Beispiel 4

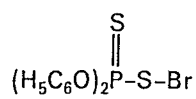

6,4 g (0,04 mol) Brom werden zu einer Lösung von 11,3 g (0,04 mol) Dithiophosphorsäure-O,O-diphenylester in 15 ml Benzol und 20 ml Methylenchlorid bei −10°C tropfenweise gegeben. Das Reaktionsgemisch wird weitere 20 Minuten gerührt. Dann wird das Lösungsmittel bei 5 Torr/0°C sorgfältig abdestilliert. Man erhält 14,4 g (99% der Theorie) S-Brom-dithiophosphorsäure-O,O-diphenylester als gelbes Öl, welches bei −20°C kristallisiert.

$^{31}$P-NMR: $\vartheta$ = 69,8 ppm (relativ zu 85%iger Phosphorsäure)

**Patentansprüche**

1. Verbindungen der Formel I

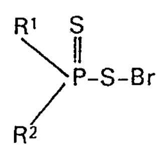 (I)

in welcher

$R^1$ und $R^2$ gleich oder verschieden sein können und unabhängig voneinander für Reste aus der Reihe $C_1$-$C_{10}$-Alkyl, Aralkyl mit $C_6$ oder $C_{10}$-Arylteil und $C_1$-$C_4$-Alkylteil, $C_6$ oder $C_{10}$-Aryl, $C_1$-$C_6$-Alkoxy, $C_6$ oder $C_{10}$-Aryloxy, Aralkoxy mit $C_6$ oder $C_{10}$-Arylteil und $C_1$-$C_4$-Alkylteil, $C_1$-$C_6$-Alkylthio, $C_6$ oder $C_{10}$-Arylthio und Aralkylthio mit $C_6$ oder $C_{10}$-Arylteil und $C_1$-$C_4$-Alkylteil stehen, wobei diese Reste einen oder mehrere, gleiche oder verschiedene Substituenten aus der Reihe $C_1$-$C_4$-Alkyl, $C_1$-$C_4$-Alkoxy, $C_1$-$C_4$-Alkylthio, $C_1$-$C_4$-Halogenalkyl, Halogen, Cyano, Nitro, $C_2$-$C_4$-Alkoxycarbonyl und im Falle von Arylteilen enthaltenden Resten in den Arylteilen auch $C_1$-$C_3$-Alkylen-dioxygruppen, welche durch 1 bis 4 gleiche oder verschiedene Halogenatome substituiert sein können, tragen können.

2. Verbindungen der Formel I gemäss Anspruch 1, in welcher

$R^1$ und $R^2$ gleich oder verschieden sind und für gegebenenfalls durch Halogen substituierte Reste aus der Reihe $C_1$–$C_5$-Alkyl, Phenyl, Benzyl, $C_1$–$C_5$-Alkoxy, Phenoxy, Benzyloxy, $C_1$–$C_5$-Alkylthio, Phenylthio und Benzylthio stehen.

3. Verbindungen der Formel I gemäss Anspruch 1, in welcher
$R^1$ für $C_1$–$C_5$-Alkyl, $C_1$–$C_5$-Alkoxy oder Phenoxy steht und
$R^2$ für $C_1$–$C_5$-Alkoxy oder Phenoxy steht.

4. Verfahren zur Herstellung von S-Brom-dithiophosphorsäure-, -dithiophosphonsäure- und -dithiophosphinsäure-Derivaten der Formel I

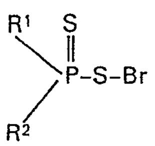

(I)

in welcher
$R^1$ und $R^2$ gleich oder verschieden sein können und unabhängig voneinander für Reste aus der Reihe $C_1$–$C_{10}$-Alkyl, Aralkyl mit $C_6$ oder $C_{10}$-Arylteil und $C_1$–$C_4$-Alkylteil, $C_6$ oder $C_{10}$-Aryl, $C_1$–$C_6$-Alkoxy, $C_6$ oder $C_{10}$-Aryloxy, Aralkoxy mit $C_6$ oder $C_{10}$-Arylteil und $C_1$–$C_4$-Alkylteil, $C_1$–$C_6$-Alkylthio, $C_6$ oder $C_{10}$-Arylthio und Aralkylthio mit $C_6$ oder $C_{10}$-Arylteil und $C_1$–$C_4$-Alkylteil stehen, wobei diese Reste einen oder mehrere, gleiche oder verschiedene Substituenten aus der Reihe $C_1$–$C_4$-Alkyl, $C_1$–$C_4$-Alkoxy, $C_1$–$C_4$-Alkylthio, $C_1$–$C_4$-Halogenalkyl, Halogen, Cyano, Nitro, $C_2$–$C_4$-Alkoxycarbonyl und im Falle von Arylteilen enthaltenden Resten in den Arylteilen auch $C_1$–$C_3$-Alkylen-dioxygruppen, welche durch 1 bis 4 gleiche oder verschiedene Halogenatome substituiert sein können, tragen können,
dadurch gekennzeichnet, dass man Dithiophosphorsäure-, Dithiophosphonsäure- oder Dithiophosphinsäure-Derivate der Formel II

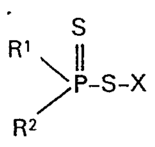

(II)

in welcher
$R^1$ und $R^2$ die oben angegebene Bedeutung haben und
X für Wasserstoff, ein Alkalimetallatom (bzw. -ion), einen gegebenenfalls durch Alkyl, Aralkyl und/oder Aryl substituierten Ammoniumrest, für Trialkylsilyl oder für den gleichen Rest, an den es gebunden ist, steht,
mit 0,9 bis 1,2 Mol Brom in Gegenwart eines inerten Verdünnungsmittels bei Temperaturen zwischen −25 und +5°C umsetzt.

5. Verfahren nach Anspruch 4, dadurch gekennzeichnet, dass man als inertes Verdünnungsmittel ein aprotisches Lösungsmittel verwendet.

6. Verfahren nach einem der Ansprüche 4 oder 5, dadurch gekennzeichnet, dass man die Verbindungen der Formel II und Brom in äquimolaren Mengen zur Umsetzung bringt.

**Revendications**

1. Composés de formule I

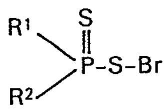

(I)

dans laquelle
$R^1$ et $R^2$ peuvent être égaux ou différents et représentent, indépendamment l'un de l'autre, des restes de la série alkyle en $C_1$ à $C_{10}$, aralkyle à partie arylique en $C_6$ ou $C_{10}$ et à partie alkylique en $C_1$ à $C_4$, aryle en $C_6$ ou $C_{10}$, alkoxy en $C_1$ à $C_6$, aryloxy en $C_6$ ou $C_{10}$, aralkoxy à partie arylique en $C_6$ ou $C_{10}$ et à partie alkylique en $C_1$ à $C_4$, alkylthio en $C_1$ à $C_6$, arylthio en $C_6$ ou $C_{10}$ et aralkylthio à partie arylique en $C_6$ ou $C_{10}$ et à partie alkylique en $C_1$ à $C_4$, ces restes pouvant porter un ou plusieurs substituants égaux ou différents de la série alkyle en $C_1$ à $C_4$, alkoxy en $C_1$ à $C_4$, alkylthio en $C_1$ à $C_4$, halogénalkyle en $C_1$ à $C_4$, halogéno, cyano, nitro, alkoxycarbonyle en $C_2$ à $C_4$ et, dans le cas de restes contenant des parties aryliques, dans les parties aryliques de ces restes, également des groupes alkylènedioxy en $C_1$ à $C_3$ qui peuvent être substitués par 1 à 4 atomes d'halogènes égaux ou différents.

2. Composés de formule I suivant la revendication 1, dans lesquels
$R^1$ et $R^2$ sont égaux ou différents et représentent des restes, éventuellement substitués par un halogène, de la série alkyle en $C_1$ à $C_5$, phényle, benzyle, alkoxy en $C_1$ à $C_5$, phénoxy, benzyloxy, alkylthio en $C_1$ à $C_5$, phénylthio et benzylthio.

3. Composés de formule I suivant la revendication 1, dans lesquels
$R^1$ est un groupe alkyle en $C_1$ à $C_5$, alkoxy en $C_1$ à $C_5$ ou phénoxy et
$R^2$ est un groupe alkoxy en $C_1$ à $C_5$ ou phénoxy.

4. Procédé de production de dérivés d'acide S-bromodithiophosphorique, -dithiophosphonique et -dithiophosphinique de formule I

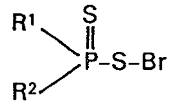

(I)

dans laquelle
$R^1$ et $R^2$ peuvent être égaux ou différents et représentent, indépendamment l'un de l'autre, des restes de la série alkyle en $C_1$ à $C_{10}$, aralkyle à partie arylique en $C_6$ ou $C_{10}$ et à partie alkylique en $C_1$ à $C_4$, aryle en $C_6$ ou $C_{10}$, alkoxy en $C_1$ à $C_6$, aryloxy en $C_6$ ou $C_{10}$, aralkoxy à partie arylique en $C_6$ ou $C_{10}$ et à partie alkylique en $C_1$ à $C_4$, alkylthio en $C_1$ à $C_6$, arylthio en $C_6$ ou $C_{10}$ et aralkylthio à partie arylique en $C_6$ ou $C_{10}$ et à partie alkylique en $C_1$ à $C_4$, ces

restes pouvant porter un ou plusieurs substituants égaux ou différents de la série alkyle en $C_1$ à $C_4$, alkoxy en $C_1$ à $C_4$, alkylthio en $C_1$ à $C_4$, halogénalkyle en $C_1$ à $C_4$, halogéno, cyano, nitro, alkoxycarbonyle en $C_2$ à $C_4$ et, dans le cas de restes contenant des parties aryliques, dans les parties aryliques de ces restes, également des groupes alkylènedioxy en $C_1$ à $C_3$ qui peuvent être substitués par 1 à 4 atomes d'halogènes égaux ou différents,
caractérisé en ce qu'on fait réagir à des températures comprises entre −25 et +5°C, avec 0,9 à 1,2 mole de brome en présence d'un diluant inerte, des dérivés d'acide dithiophosphorique, dithiophosphonique ou dithiophosphinique de formule II

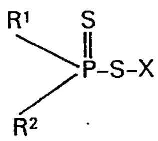
(II)

dans laquelle
$R^1$ et $R^2$ ont la définition indiquée ci-dessus et
X désigne l'hydrogène, un atome (ou un ion) de métal alcalin, un reste ammonium éventuellement substitué par un radical alkyle, aralkyle et/ou aryle, un groupe trialkylsilyle ou un reste qui est le même que celui auquel il est lié.

5. Procédé suivant la revendication 4, caractérisé en ce qu'on utilise un solvant aprotique comme diluant inerte.

6. Procédé suivant l'une des revendications 4 ou 5, caractérisé en ce qu'on fait réagir les composés de formule II et le brome en quantités équimolaires.

## Claims

1. Compounds of the formula I

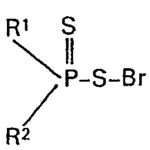
(I)

in which
$R^1$ and $R^2$ can be identical or different and independently of one another represent radicals from the series comprising $C_1$–$C_{10}$-alkyl, aralkyl having a $C_6$- or $C_{10}$-aryl part and $C_1$–$C_4$-alkyl part, $C_6$- or $C_{10}$-aryl, $C_1$–$C_6$-alkoxy, $C_6$- or $C_{10}$-aryloxy, aralkoxy having a $C_6$- or $C_{10}$-aryl part and a $C_1$–$C_4$-alkyl part, $C_1$–$C_6$-alkylthio, $C_6$- or $C_{10}$-arylthio and aralkylthio having a $C_6$- or $C_{10}$-aryl part and a $C_1$–$C_4$-alkyl part, and these radicals can carry one or more identical or different substituents from the series comprising $C_1$–$C_4$-alkyl, $C_1$–$C_4$-alkoxy, $C_1$–$C_4$-alkylthio, $C_1$–$C_4$-halogenoalkyl, halogen, cyano, nitro or $C_2$–$C_4$-alkoxycarbonyl, and, in the case of radicals containing aryl parts, the aryl parts can also carry $C_1$–$C_3$-alkylenedioxy groups which can be substituted by 1 to 4 identical or different halogen atoms.

2. Compounds of the formula I according to Claim 1, in which
$R^1$ and $R^2$ are identical or different and represent optionally halogen-substituted radicals from the series comprising $C_1$–$C_5$-alkyl, phenyl, benzyl, $C_1$–$C_5$-alkoxy, phenoxy, benzyloxy, $C_1$–$C_5$-alkylthio, phenylthio and benzylthio.

3. Compounds of the formula I according to Claim 1, in which
$R^1$ represents $C_1$–$C_5$-alkyl, $C_1$–$C_5$-alkoxy or phenoxy, and
$R^2$ represents $C_1$–$C_6$-alkoxy or phenoxy.

4. Process for the preparation of S-bromo-dithiophosphoric acid, -dithiophosphonic acid and -dithiophosphinic acid derivatives of the formula I

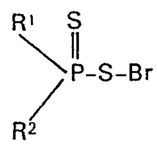
(I)

in which
$R^1$ and $R^2$ can be identical or different and independently of one another represent radicals from the series comprising $C_1$–$C_{10}$-alkyl, aralkyl having a $C_6$- or $C_{10}$-aryl part and $C_1$–$C_4$-alkyl part, $C_6$- or $C_{10}$-aryl, $C_1$–$C_6$-alkoxy, $C_6$- or $C_{10}$-aryloxy, aralkoxy having a $C_6$- or $C_{10}$-alkyl part and a $C_1$–$C_4$-alkyl part, $C_1$–$C_6$-alkylthio, $C_6$- or $C_{10}$-arylthio and aralkylthio having a $C_6$- or $C_{10}$-aryl part and a $C_1$–$C_4$-alkyl part, and these radicals can carry one or more identical or different substituents from the series comprising $C_1$–$C_4$-alkyl, $C_1$–$C_4$-alkoxy, $C_1$–$C_4$-alkylthio, $C_1$–$C_4$-halogenoalkyl, halogen, cyano, nitro or $C_2$–$C_4$-alkoxycarbonyl, and, in the case of radicals containing aryl parts, the aryl parts can also carry $C_1$–$C_3$-alkylenedioxy groups which can be substituted by 1 to 4 identical or different halogen atoms,
characterised in that dithiophosphoric acid, dithiophosphonic acid or dithiophosphinic acid derivatives of the formula II

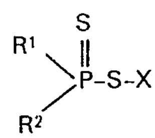
(II)

in which
$R^1$ and $R^2$ have the meaning given above and X represents hydrogen, an alkali metal atom (or ion), an ammonium radical which is optionally substituted by alkyl, aralkyl and/or aryl, or represents trialkylsilyl or the same radical to which it is bonded,
are reacted with 0.9 to 1.2 mol of bromine in the presence of an inert diluent at temperatures between −25 and +5°C.

5. Process according to Claim 4, characterised

in that an aprotic solvent is used as the inert diluent.

6. Process according to one of Claims 4 or 5, characterised in that the compounds of the formula II and bromine are brought to reaction in equimolar amounts.